# DEMANDE DE BREVET EUROPEEN

(11) **EP 2 740 362 A1**
(43) Date de publication de la demande: **11.06.2014**
(21) Numéro de dépôt: 13195796.1
(22) Date de dépôt: 05.12.2013
(51) Int. Cl.: A21D 8/02, A21D 8/04

(54) **Procédé de préparation d'une paté fermentée et procédé de panification associé**

(30) Priorité: 10.12.2012 FR 1261813
(71) Demandeur: Banette SAS, 45250 Briare (FR)
(72) Inventeur: FAISY, Fabien, BRIARE 45250 (FR); BILHEUDE, Michel, BRIARE 45250 (FR)
(74) Mandataire: Deschamps, Samuel

(57) **Abrégé**

L'invention concerne essentiellement un procédé de préparation d'une pâte fermentée destinée à être incorporée dans un mélange pour panification, caractérisé en ce qu'il comporte une étape (10) de premier pétrissage réalisée avec de la semoule ou de la farine de blé dur, de la farine de blé et du sel, et en ce que la proportion de sel contenu dans la pâte fermentée est comprise entre un pourcent et trois pourcents sur le poids total de farine.

## Description

### DOMAINE TECHNIQUE DE L'INVENTION

L'invention concerne un procédé de préparation d'une pâte fermentée ainsi qu'un procédé de panification associé.

L'invention trouve une application particulièrement avantageuse dans le domaine de la panification.

### ETAT DE LA TECHNIQUE

Selon l'art antérieur, un procédé de panification comporte essentiellement un frasage, qui est un mélange des ingrédients à faible vitesse, suivi d'un pétrissage puis d'un pointage, qui est une première fermentation destinée à développer les arômes de la pâte et donner de la force à la pâte. Par force, on entend l'aptitude de la pâte à se développer tout en gardant le gaz carbonique formé pendant la fermentation. Ledit procédé comporte en outre un façonnage puis un apprêt qui est une seconde fermentation essentiellement destinée à donner du volume à la pâte et finalement une cuisson.

Le document FR 2 860 685 (Banette) décrit un procédé de panification par une méthode directe, dans lequel le frasage est exécuté avec de la farine, de l'eau et une proportion significative de pâte fermentée. Ladite pâte fermentée est prélevée d'une pâte issue d'un pétrissage précédent ou de pâtons façonnés et fermentés non cuits.

Cependant, ledit procédé conduit à utiliser de la pâte fermentée de quantité et de qualité variable, avec un degré de fermentation plus ou moins avancé. La qualité du pain issu dudit procédé est variable, la pâte fermentée étant souvent inadaptée. En outre, ledit procédé comporte deux pétrissages de la pâte fermentée. Lesdits pétrissages provoquent une très importante oxydation de la pâte à pain ainsi qu'une déstructuration du gluten contenu dans cette pâte à pain, ce qui rend la pâte moins tolérante et plus poreuse. Par pâte tolérante, on entend une pâte ayant une bonne capacité à supporter sans dommage un manque ou un excès de fermentation. Les arômes du pain sont alors altérés.

### OBJET DE L'INVENTION

L'invention a notamment pour but de résoudre ce problème.

A cette fin, l'invention concerne un procédé de préparation d'une pâte fermentée destinée à être incorporée dans un mélange pour panification, caractérisé en ce qu'il comporte une étape de premier pétrissage réalisée avec de la semoule ou de la farine de blé dur, de la farine de blé et du sel, et en ce que la proportion de sel contenu dans la pâte fermentée est comprise entre un pourcent et trois pourcents sur le poids total de farine.

Selon une mise en oeuvre, la proportion de sel contenu dans la pâte fermentée est sensiblement égale à 1,8 pourcent sur le poids total de farine.

Selon une mise en oeuvre, l'étape de premier pétrissage est réalisée avec de la semoule ou de la farine de blé dur, de la farine de blé, du sel, du levain de blé, du malt de blé, de l'acide ascorbique, du gluten, des enzymes, de la levure sèche active et/ou de la levure désactivée.

Selon une mise en oeuvre, la proportion de semoule ou de la farine de blé dur est comprise entre dix pourcents et quatre-vingt-dix pourcents de la proportion totale de la pâte fermentée.

Selon une mise en oeuvre, la proportion de farine de blé est comprise entre dix pourcents et quatre-vingt-dix pourcents de la proportion totale de la pâte fermentée.

Selon une mise en oeuvre, le procédé comporte une étape de second pétrissage d'un mélange issu de l'étape de premier pétrissage.

Selon une mise en oeuvre :
- la durée de l'étape de premier pétrissage, effectué à une vitesse VA, est comprise entre quatre minutes et six minutes, et
- la durée de l'étape de second pétrissage, effectué à une vitesse V_{B}, est comprise entre zéro minute et quatre minutes,
le premier pétrissage et le second pétrissage étant réalisés dans un pétrin à spirale ou batteur.

Selon une mise en oeuvre:
- la durée de l'étape de premier pétrissage, effectué à une vitesse V_{c}, est comprise entre quatre minutes et huit minutes, et
- la durée de l'étape de second pétrissage, effectué à une vitesse V_{D}, est comprise entre zéro minute et six minutes,
   le premier pétrissage et le second pétrissage étant réalisés dans un pétrin à axe oblique.

Selon une mise en oeuvre, le procédé comporte une étape de conservation au froid positif pendant une durée comprise entre seize heures et trente-six heures.

Selon une mise en oeuvre, le procédé comporte une étape de conservation à température ambiante, pendant une durée comprise entre une heure et quatre heures.

L'invention concerne en outre un procédé de panification caractérisé en ce qu'il comporte les étapes suivantes :
- frasage de farine, d'eau et de pâte fermentée issue du procédé de préparation de pâte fermentée,
- pétrissage d'un mélange issu de l'étape de frasage,
- pointage d'une pâte issue de l'étape de pétrissage,
- façonnage d'une pâte issue de l'étape de pointage,
- apprêt de pâtons issus de l'étape de façonnage,
- cuisson de pâtons issus de l'étape d'apprêt.

Selon une mise en oeuvre, la quantité de pâte fermentée incorporée dans l'étape de frasage est comprise entre deux cents grammes et deux cent cinquante grammes par kilogramme de farine.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : un diagramme fonctionnel montrant les différentes étapes du procédé de préparation d'une pâte fermentée selon l'invention ;
Figure 2 : un diagramme fonctionnel montrant les différentes étapes du procédé de panification selon l'invention.

Les éléments identiques, similaires ou analogues conservent la même référence d'une figure à l'autre.

### DESCRIPTION D'EXEMPLES DE REALISATION DE L'INVENTION

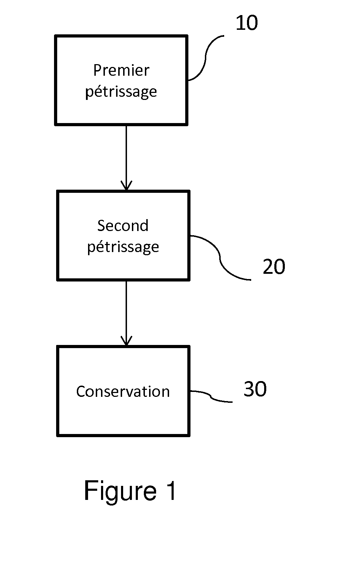

La Figure 1 montre les différentes étapes du procédé de préparation d'une pâte fermentée selon l'invention.

Dans une étape 10, un premier pétrissage est réalisé avec de la semoule ou de la farine de blé dur, de la farine de blé et du sel. Par pétrissage, on entend l'opération consistant à appliquer une force mécanique à un mélange afin d'obtenir l'homogénéisation des ingrédients ainsi que certaines propriétés mécaniques et physiques. Selon un mode de réalisation, le premier pétrissage est réalisé en outre avec du levain de blé, du malt de blé, de l'acide ascorbique, du gluten, des enzymes, de la levure sèche active et de la levure désactivée. En variante, un ou plusieurs ingrédients sont enlevés de ladite étape 10 de premier pétrissage. Un second pétrissage est ensuite réalisé dans une étape 20.

Le Tableau 1 ci-dessous présente un exemple de composition d'une préparation pour pâte fermentée.

**Tableau 1 : Exemple de composition d'une préparation pour pâte fermentée.**

| Ingrédients | Composition |
|---|---|
| Semoule ou de la farine de blé dur | 10% à 90% |
| Farine de blé | 10% à 90% |
| Sel | 1 % à 20% |
| Levain de blé | 0,1 % à 50% |
| Malt de blé | 0,05% à 3% |
| Acide ascorbique | 0,01% à 0,2% |
| Gluten | 0,2% à 5% |
| Enzymes | 0,01% à 0,2% |
| Levure sèche active | 0,2% à 3% |
| Levure désactivée | 0,05% à 1 % |

Dans un premier mode de réalisation, le premier pétrissage de l'étape 10 est réalisé durant quatre à six minutes à une vitesse VA, dite vitesse lente. La valeur de la vitesse VA est comprise entre quatre-vingt tours par minute et cent tours par minute. Selon ledit premier mode de réalisation, le pétrissage est réalisé dans un pétrin à spirale ou dans un pétrin à batteur. Par pétrin à spirale, on entend un pétrin comportant une cuve ayant un axe sensiblement horizontal et un fraiseur en forme de spirale d'axe perpendiculaire à l'axe de la cuve. Par pétrin à batteur, on entend un pétrin comportant une cuve ayant un axe sensiblement horizontal et un fraiseur d'axe perpendiculaire à l'axe de la cuve. Une rotation du fraiseur par rapport à la cuve permet d'appliquer une force mécanique audit mélange.

Le second pétrissage de l'étape 20 est ensuite réalisé durant zéro à quatre minutes à une vitesse V_{B}, dite vitesse rapide. La valeur de la vitesse V_{B} est comprise entre cent cinquante tours par minute et deux cents tours par minute.

Dans un second mode de réalisation, le premier pétrissage est réalisé durant quatre à huit minutes à une vitesse V_{C}, dite vitesse lente. La valeur de la vitesse V_{C} est comprise entre trente-cinq tours par minute et cinquante tours par minute. Dans ledit second mode de réalisation, le pétrissage est réalisé dans un pétrin à axe oblique. Par pétrin à axe oblique, on entend un pétrin comportant une cuve ayant un axe sensiblement horizontal et un fraiseur incliné d'un angle d'environ quarante cinq degrés par rapport à l'axe de la cuve. Une rotation du fraiseur par rapport à la cuve permet d'appliquer une force mécanique audit mélange. Le second pétrissage est ensuite réalisé durant zéro à six minutes à une vitesse V_{D}, dite vitesse rapide. La valeur de la vitesse V_{D} est comprise entre soixante-dix tours par minute et quatre-vingt-dix tours par minute.

Dans les deux modes de réalisation, le pétrissage est de durée modérée, ce qui permet de ne pas dégrader les arômes du mélange. En outre, dans une pâte issue de l'étape 20 de second pétrissage, la qualité du gluten est préservée, ce qui favorise la tolérance de ladite pâte au froid.

Dans une étape 30, la pâte issue de l'étape 20 de pétrissage est conservée dans un bac. Selon un premier mode de réalisation, ladite pâte est conservée au froid positif pendant une durée comprise entre seize heures et trente-six heures. Par froid positif, on entend que ladite pâte est conservée à une température comprise entre deux degrés Celsius et quatre degrés Celsius. Selon un second mode de réalisation, la pâte issue de l'étape 20 de second pétrissage est conservée à température ambiante, par exemple comprise entre vingt degrés Celsius et vingt-cinq degrés Celsius, pendant une durée comprise entre une heure et quatre heures. Lorsque l'étape 30 est terminée, une pâte fermentée prête à être utilisée est obtenue. La proportion de sel contenu dans la pâte fermentée est comprise entre un pourcent et trois pourcents sur le poids total de farine. Dans un exemple, la proportion de sel contenu dans la pâte fermentée est égale à 1,8 pourcent sur le poids total de farine. La teneur en sel est donc réduite. La pâte fermentée obtenue après l'étape 30 est régulière et sa plage d'utilisation possible est large, ce qui apporte de la souplesse à l'organisation de travail de l'utilisateur de la pâte fermentée. La pâte fermentée présente un fort taux d'hydratation favorisant le développement des arômes et ainsi le goût du pain. L'oxydation de la pâte est réduite, ce qui permet un bon développement des arômes et de la couleur du pain. En outre, ce procédé de préparation est rapide et permet de maîtriser les quantités de pâte fermentée obtenues.

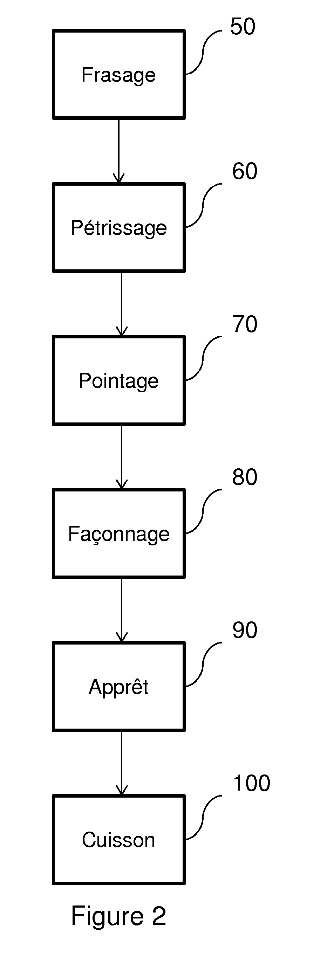

La Figure 2 montre les différentes étapes du procédé de panification selon l'invention. Dans une étape 50, un frasage est réalisé. Dans un mode de réalisation, les ingrédients utilisés dans l'étape 50 de frasage sont de la farine, de l'eau, de la levure et la pâte fermentée issue du procédé de préparation d'une pâte fermentée selon l'invention. La quantité de farine est de mille grammes. La quantité d'eau est comprise entre six cent soixante grammes et six cent quatre-vingts grammes. La quantité de levure est égale à dix grammes. La quantité de pâte fermentée est comprise entre deux cents grammes et deux cent cinquante grammes.

La farine est préparée de manière classique. Elle contient de l'acide ascorbique et d'autres ingrédients tels que du gluten et des enzymes de panification.

Dans une étape 60, un pétrissage d'un mélange issu de l'étape 50 de frasage est réalisé. Le pétrissage est réalisé par exemple dans un pétrin oblique.

Dans une étape 70, un pointage d'une pâte issue du pétrissage est réalisé. Par pointage, on entend une fermentation destinée à développer les arômes et donner de la force.

Dans une étape 80, un façonnage d'une pâte issue de l'étape 70 de pointage est réalisé. Ladite pâte est divisée en pâtons, ces pâtons donnant ultérieurement chacun un pain. Les pâtons sont avantageusement façonnés à la main.

Dans une étape 90, un apprêt est réalisé. Par apprêt, on entend une fermentation essentiellement destinée à donner du volume aux pâtons.

Dans une étape 100, une cuisson de pâtons ayant subit un apprêt est réalisée, de sorte que des pains soient obtenus à l'issu de cette étape 100.

La proportion de sel dans la pâte fermentée permet de limiter l'apport de sel dans le pain à 1,8 pourcent sans risque de perte de goût pour le consommateur.

## Revendications

1. Procédé de préparation d'une pâte fermentée destinée à être incorporée dans un mélange pour panification, **caractérisé en ce qu'**il comporte une étape (10) de premier pétrissage réalisée avec de la semoule ou de la farine de blé dur, de la farine de blé et du sel, et **en ce que** la proportion de sel contenu dans la pâte fermentée est comprise entre un pourcent et trois pourcents sur le poids total de farine.

2. Procédé selon la revendication 1, **caractérisé en ce que** la proportion de sel contenu dans la pâte fermentée est sensiblement égale à 1,8 pourcent sur le poids total de farine.

3. Procédé selon la revendication 1 ou 2, **caractérisé en ce que** l'étape (10) de premier pétrissage est réalisée avec de la semoule ou de la farine de blé dur, de la farine de blé, du sel, du levain de blé, du malt de blé, de l'acide ascorbique, du gluten, des enzymes, de la levure sèche active et/ou de la levure désactivée.

4. Procédé selon l'une des revendications 1 à 3, **caractérisé en ce que** la proportion de semoule ou de la farine de blé dur est comprise entre dix pourcents et quatre-vingt-dix pourcents de la proportion totale de la pâte fermentée.

5. Procédé selon l'une des revendications 1 à 4, **caractérisé en ce que** la proportion de farine de blé est comprise entre dix pourcents et quatre-vingt-dix pourcent de la proportion totale de la pâte fermentée.

6. Procédé selon l'une des revendications 1 à 5, **caractérisé en ce qu'**il comporte une étape (20) de second pétrissage d'un mélange issu de l'étape (10) de premier pétrissage.

7. Procédé selon l'une des revendications 1 à 6, **caractérisé en ce que** :
- la durée de l'étape (10) de premier pétrissage, effectué à une vitesse (VA), est comprise entre quatre minutes et six minutes, et
- la durée de l'étape (20) de second pétrissage, effectué à une vitesse (V_{B}), est comprise entre zéro minute et quatre minutes,
le premier pétrissage et le second pétrissage étant réalisés dans un pétrin à spirale ou batteur.

8. Procédé selon l'une des revendications 1 à 6, **caractérisé en ce que** :
- la durée de l'étape (10) de premier pétrissage, effectué à une vitesse (V_{C}), est comprise entre quatre minutes et huit minutes, et
- la durée de l'étape (20) de second pétrissage, effectué à une vitesse (V_{D}), est comprise entre zéro minute et six minutes,
le premier pétrissage et le second pétrissage étant réalisés dans un pétrin à axe oblique.

9. Procédé selon l'une des revendications 1 à 8, **caractérisé en ce qu'**il comporte une étape (30) de conservation au froid positif pendant une durée comprise entre seize heures et trente-six heures.

10. Procédé selon l'une des revendications 1 à 8, **caractérisé en ce qu'**il comporte une étape de conservation à température ambiante pendant une durée comprise entre une heure et quatre heures.

11. Procédé de panification **caractérisé en ce qu'**il comporte les étapes suivantes :
- frasage (50) de farine, d'eau et de pâte fermentée issue du procédé de préparation de pâte fermentée selon l'une des revendications précédentes,
- pétrissage (60) d'un mélange issu de l'étape (50) de frasage,
- pointage (70) d'une pâte issue de l'étape (60) de pétrissage,
- façonnage (80) d'une pâte issue de l'étape (70) de pointage,
- apprêt (90) de pâtons issus de l'étape (80) de façonnage,
- cuisson (100) de pâtons issus de l'étape (90) d'apprêt.

12. Procédé selon la revendication 11, **caractérisé en ce que** la quantité de pâte fermentée incorporée dans l'étape (50) de frasage est comprise entre deux cents grammes et deux cent cinquante grammes par kilogramme de farine.
